# EUROPEAN PATENT SPECIFICATION

(11) **EP 1 416 735 B1**
(45) Date of publication and mention of the grant of the patent: **28.12.2005**
(21) Application number: 02024184.0
(22) Date of filing: 30.10.2002
(51) Int. Cl.: H04N 7/26

(54) **Method of computing temporal wavelet coefficients of a group of pictures**
Verfahren zur Berechnung von zeitlichen Wavelet-Koeffizienten eines GOP
Procédé de calcul de coéfficients d' ondelettes temporels d'un groupe d'images

(43) Date of publication of application: 06.05.2004
(73) Proprietor: Visiowave S.A., 1024 Ecublens (CH)
(72) Inventor: Ziliani, Francesco, 1004 Lausanne (CH); Reichel, Julien, 1020 Renens (CH)
(74) Representative: Bugnion Genève

(56) References cited:
- HOU W ET AL: "VERY LOW BIT-RATE VIDEO CODING USING MOTION COMPENSATED 3-D WAVELETTRANSFORM" SHANGHAI JIAOTONG DAXUE XUEBAO - JOURNAL OF SHANGHAI JIAOTONG UNIVERSITY, SHANGHAI JIATONG UNIVERSITY PRESS, SHANGHAI,, CN, vol. 3, no. 4, December 1999 (1999-12), pages 342-344, XP001014726 ISSN: 1006-2467
- HEIJMANS H ET AL: "BUILDING ADAPTIVE 2D WAVELET DECOMPOSITIONS BY UPDATE LIFTING" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY: IEEE, US, vol. 1 OF 3, 22 September 2002 (2002-09-22), pages 397-400, XP001134144 ISBN: 0-7803-7622-6
- SECKER A ET AL: "MOTION-COMPENSATED HIGHLY SCALABLE VIDEO COMPRESSION USING AN ADAPTIVE 3D WAVELET TRANSFORM BASED ON LIFTING" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY: IEEE, US, vol. 2 OF 3. CONF. 8, 7 October 2001 (2001-10-07), pages 1029-1032, XP001045750 ISBN: 0-7803-6725-1

## Description

The present invention relates to a method of computing wavelets temporal coefficients of a GOP (Group Of Pictures) the length of which is 2ⁿ by applying recursively a temporal transform generating n decomposition levels each decomposition level comprising a function M(aᵢ,bᵢ) and a function D(aᵢ,bᵢ)of each couple of input signals aᵢ,bᵢ. The technique used is based on wavelets, for digital video coding.

Very low Bit-Rate Video Coding Using Motion Compensated 3-D Wavelets Transform, Hou Wei-dong, Mo Yu-long, Hu Hai-ping, Shanghai Jiaotong Daxue Xuebao - Journal Of Shanghai Jiaotong University, Shanghai Jiatong University Press, Shanghai, CN (12-1999), 3(4), 342-344, shows such a technique.

A picture is a matrix of numbers each number representing the color intensity, or the luminance, or a value computed by an algorithm, etc of a pixel. Should the encoding of the image is made on a byte each number is comprised between 0 and 255. A picture may be referred to as frame when it represents a matrix of the color intensity, or the luminance of a pixel.

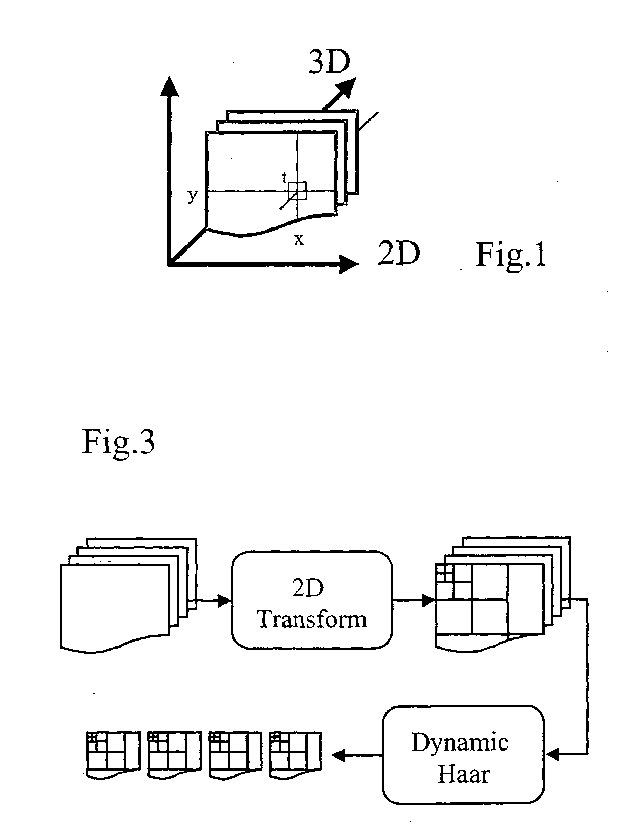

A digital video signal is composed of a sequence of frames. The appearance of motion is given to the observer by displaying a certain amount of frames per second (usually 25 or 30). In this context, a digital video signal is indeed a 3-D signal (3-dimensional), where 2 dimensions represent the image plane (a single frame), and the third dimension represents the time (successive frames of the sequence (figure 1))

In order to efficiently compress such 3-D signals it is necessary to exploit both spatial (2-D) and temporal (3-D) redundancies. Wavelets have been widely used to exploit the spatial redundancies of the video sequence by applying for example the Haar transform.

The Haar transform is well known in the wavelet theory: it is the wavelet transform with one of the shortest support. Given two input values A and B, the corresponding Haar coefficients are simply their half difference Δ, and their mean µ.

In the context of video coding, the Haar transform has been used both as a spatial and as a temporal transform. In this second case the temporal decomposition is applied on a GOP (Group Of Pictures) of size 2ⁿ. The input data can be the raw images of the video sequence (luminance and chrominance values) or their spatial decomposition using any 2-D linear transform (transform coefficients) .

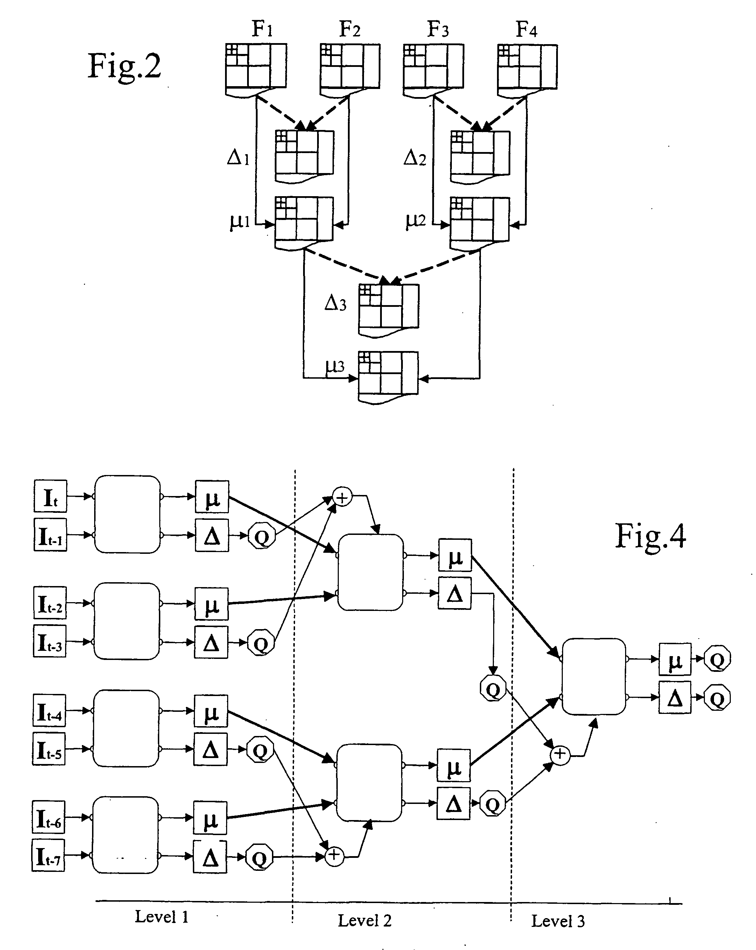

When Haar is applied as a temporal transform we obtain the scheme reported in figure 2. Here the input is represented by four pictures (F₁ , F₂ , F₃ , F₄) generated by 2-D Haar transform of the frames of the input sequence.

Given F₁ and F₂ the corresponding temporal Haar transform is composed of a mean picture µ₁ and a difference picture Δ₁, µ₁ and Δ₁ represent the Haar transform of F₁ and F₂. It is possible to recursively apply the Haar transform so as to generate several decomposition levels. In the example of figure 3, we show two levels of decomposition obtained by applying Haar first on the pictures (F₁ , F₂ ) and (F₃ , F₄) then on the two mean pictures (µ₁, µ₂). The corresponding Haar transform is represented by Δ₁, Δ₂, Δ₃ and µ₃. Note that the Haar decomposition is extremely efficient for video coding applications when the input pictures are similar to each other. In this case, the difference pictures are close to zero, thus easy to compress with an entropic coder.

In the Haar transform, the decomposition is equally applied on all the inputs and for each decomposition.

The present invention proposes a method of computing wavelets temporal coefficients of a GOP allowing to efficiently exploit the temporal redundancies of the transform coefficients computed by any 2-D linear transform.

The method according to the invention , is characterized in that during the last n-1 decomposition levels a decomposition level transform block is controlled by a control signal corresponding to the sum of two functions D(aᵢ,bᵢ) outputted from the previous decomposition level while the corresponding functions M(aᵢ,bᵢ) of said previous decomposition level are the input signals for said transform block, and in that when the said control signal is equal to zero the output values of said transform block are the functions M (M (aᵢ, bᵢ), M(aᵢ₊₁,bᵢ₊₁)) and D(M(aᵢ,bᵢ), M(aᵢ₊₁,bᵢ₊₁)) of the input signals M(aᵢ,bᵢ) and when the control signal is different from zero the output signals are the said input signals..

According to a preferred embodiment the function M (aᵢ,bᵢ) is the mean value of signals aᵢ,bᵢ and the function D(aᵢ,bᵢ) is the quantization of the mean difference of the signals aᵢ,bᵢ

The proposed technique efficiently exploits the temporal redundancies of the transform coefficients computed preferably by a 2-D linear transform using the new method called by the inventors "Dynamic Temporal Transform". Differently from other solutions this technique does not require a motion estimation procedure that is a computationally expensive task.

According to an embodiment 2ⁿ frames of the input sequence are first independently transformed with a 2-D linear transform into a GOP of 2ⁿ pictures each picture of the said GOP containing the transform coefficients of each input frame, the said transform coefficients are passed to a temporal transform generating a first level of temporal decompositions each decomposition comprising temporal mean and temporal difference, and for the further n-1 decomposition levels the control signal is the sum of the quantized version of two temporal mean differences outputted from the previous decomposition level

Note that the proposed "Dynamic Temporal Transform" for this embodiment is applied on the results of 2-D linear transform and not on the raw images. This choice has advantages in the complexity of the encoder.

According to another embodiment the input values for the first decomposition level are the raw images, in that the control signal is the sum of the coded, quantized, dequantized and decoded image mean differences of the two signals outputted from the previous level.

According to a preferred embodiment, the 2-D linear transform is the 2-D 5.3 wavelet transform where the low pass filter is a 5 tap filter and the high pass filter is a 3 tap filter and the temporal transform is the Haar temporal transform.

The invention will be presented with the help of the accompanying drawing where the 2-D linear transform and the temporal transform are Haar transforms.
Figure 1 is a representation of video sequence seen as a 3-D signal;
Figure 2 is a scheme of the Haar temporal decomposition;
Figure 3 is an overview scheme of the present invention method;
Figure 4 is a scheme of the present invention method;
Figure 5 is a presentation of the controlled transform block;
Figure 6 is illustrative decomposition according to the classic Haar and the present invention transform.
Figure 7 is a scheme of the temporal Haar transform applied to the image domain.
Figure 8 is a presentation a of the present invention method applied to the image domain.

The overview scheme of the proposed technique according to the first embodiment is depicted in figure 3.

The proposed "Dynamic Temporal Transform" can be applied on any GOP with length 2ⁿ. In figure 3, the GOP has a length of 4 (2²). These images are first independently transformed with 2-D wavelets (parallel implementation can be suitable for this step). As result we generate four spatial decompositions containing the wavelets coefficients of each input image. Note that each decomposition contains as many coefficients as pixels in the input image. These coefficients are then passed to the "Dynamic Temporal Transform" which generates four temporal decompositions. Also in this case, each decomposition contains as many coefficients as pixels in the input image. One of these decomposition is a temporal mean, three are temporal differences as it will be explained in more details in the next sessions.

The length of the GOP (2ⁿ) defines the number of temporal decompositions (n). The higher is n, the more temporal redundancies can be exploited. However, n also defines the delay introduced by the encoder and thus it cannot be too large in practical applications.

The proposed method defines a procedure to dynamically decide which input coefficient will be further transformed and which coefficient will simply be propagated.

The defined scheme is described in figure 4 where the procedure is extended to eight input pictures Iₜ-Iₜ₋₇. The scheme shows that in the first level, the classic Haar transform, described above (figure 2), is applied on all the input. The results are two pictures: on the top the mean µ and on the bottom the difference Δ. The quantized version, Q, of the difference picture is used as control signal for the next decomposition level, while the mean picture is one of the input for the controlled transform block of the next decomposition level.

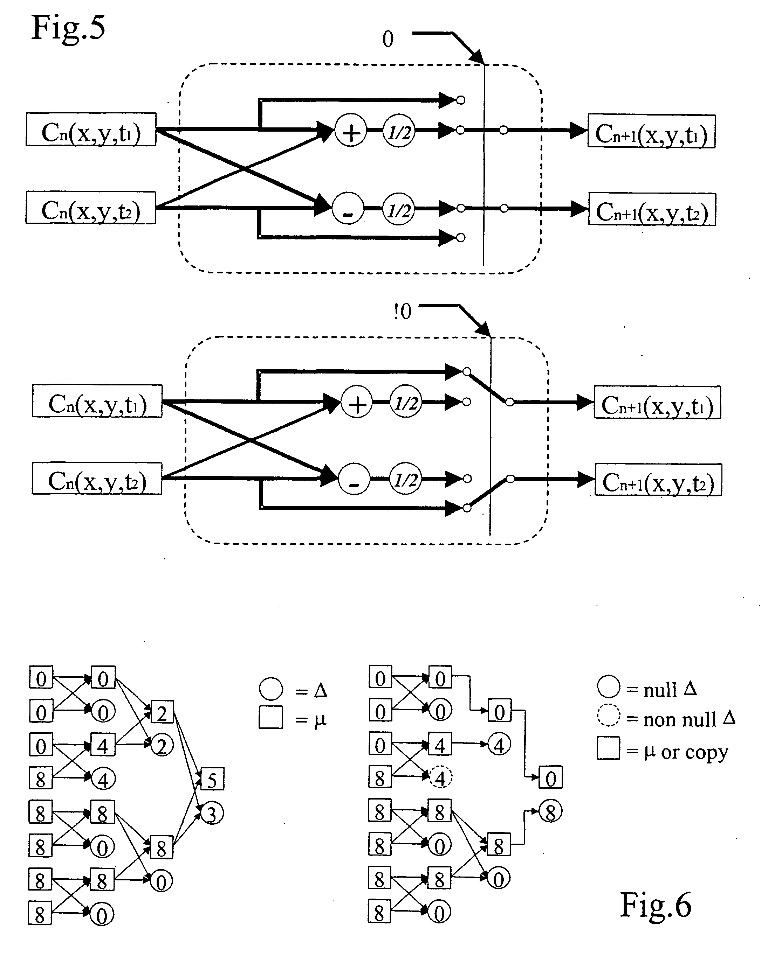

According to the control signal the output of the controlled transform block can be the mean and the difference of the input signals or directly the input signals. The detailed mechanisms of the controlled transform block are depicted in figure 5. The input signals are Cₙ(x,y,t₁) and Cₙ(x,y,t₂) and they represent the wavelet coefficients generated at the n^{th} decomposition in the subband position x, y, respectively at time t₁, t₂.

Two cases are depicted. In the first case the control signal, Q, is zero. Here the output signal is simply the Haar transform of the input (roughly speaking the mean and the difference of the input signals). In the second case the control signal, Q, is different from zero. Here the output signals are directly the input signals.

In order to illustrate the mechanisms of the proposed "Dynamic Temporal Transform", two examples are presented in figure 6. The first shows the mechanisms of the classic Haar transform. The input signal is piece-wise constant simulating a strong discontinuities in the temporal domain (for example a moving object). The eight (2³) input values are decomposed on 3 levels. At each level from two input signals we obtain two coefficients as the mean of the input and half of their difference (in the example, the input 0,0 give 0,0 as mean and half difference and another input 0,4, is transformed in 2,2). The eight input signals are after the three level of decompositions represented by 8 coefficients. The first one is the last computed mean value (in this example is 5) and the other 7 are all the computed differences (in this example 3,2,0,0,4,0,0). From these coefficients it is possible to reconstruct the input values.

On the same input signal, we have applied the proposed "Dynamic Temporal Transform". The difference with the standard Haar transform happens at the second level of decomposition. Now the input signals 0,4 gives us 0,4 instead of 2,2. This is because the control signal for this transform block was non null (in figure 6, the non null control signal is doted circle)). Because of these differences, after three level of decomposition we have the following eight output coefficients: 0 is the last mean and 8,4,0,0,4,0,0 are all the differences. After applying a quantization step of 2 to the result obtained by the classic Haar transform we obtain the following coefficients 2,1,1,0,0,2,0,0 which after decoding gives 0,0,0,8,6,6,6,6. By applying the same to the coefficients obtained by applying "Dynamic Temporal Transform" we obtain 0,4,2,0,0,2,0,0 and after decoding 0,0,0,8,8,8,8,8 which is exactly the input, that means that the "Dynamic Temporal Transform" performs, in the above example better encoding than the classic Haar transform.

The proposed "Dynamic Temporal Transform" improves significantly the performances of the classic Haar transform in the context of video coding. The main advantage is that at a given rate, the proposed "Dynamic Temporal Transform" does not introduce annoying artifacts such as ghosts around the moving objects, whereas the classic Haar transform does. The robustness against these artifacts makes it possible to increase the GOP's length and to exploit more the temporal redundancies in the input signal. In classic temporal Haar transform, the presence of artifacts when moving objects are in the scene, limits the GOP's length to 2⁴. This limitation has an impact on the coding performances of the classic temporal Haar transforms.

Another important advantage of the proposed implementation lies on its reduced complexity compared to standard approaches such as MPEG-2/4. In fact, the proposed encoding process does not need a prior decoding procedure in the encoder to exploit the temporal redundancies.

No drawbacks are introduced with the proposed implementation of the "Dynamic Temporal Transform". Since the transform is symmetric and reversible there is no need to send to the decoder any additional control signal.

The proposed "Dynamic Temporal Transform" has a major domain of application in the compression of video surveillance signals. The reasons are:
1. In security videos a large part of the scene remains fixed: thus the temporal redundancy exploited on long GOPs has a significant impact on the compression performances. The use of classical temporal Haar transform on long GOPs is limited by the ghost artifacts. This is corrected with the use of the proposed "Dynamic Temporal Transform".
2. In security scenarios, real time constraints are very strong: the proposed "Dynamic Temporal Transform" has a very low computational complexity compared to MPEG-2/4 standard approaches and can be easily implemented in hardware.

However, the proposed Dynamic Haar transform can be used in other domain of application where high computational performances are required and where static scenes are compressed. Examples are Video Telephony, Video Forums, Video conferences, etc...

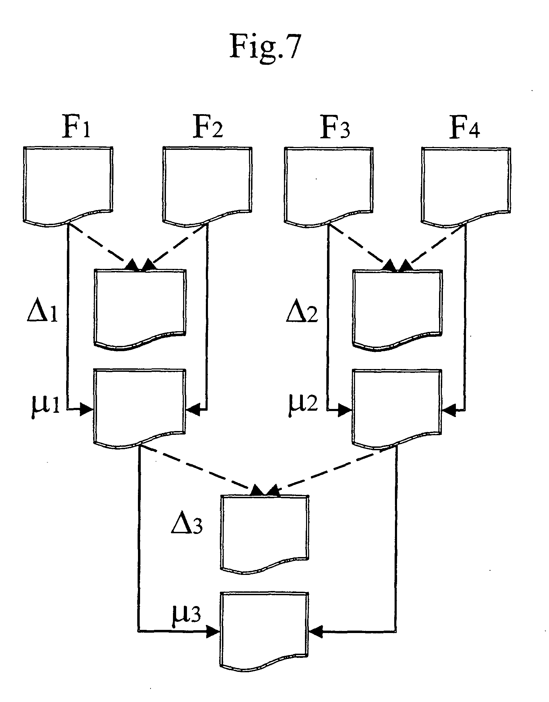

The method described in the above embodiment is applied in the linear transform domain: e.g it is applied on the transform coefficients such as the wavelets coefficients. However, it can be extended according to another embodiment of the present invention and generalized to the image domain and thus be applied on the color information of an image. In this context, instead of applying the "Dynamic Temporal Transform" in the transform domain (e.g. on the wavelet coefficients as depicted in figure 2) it is possible to apply the Dynamic Haar on the image domain (e.g. in the color intensities whatever format : RGB, YUV, YcbCr,... as depicted in figure 7.).

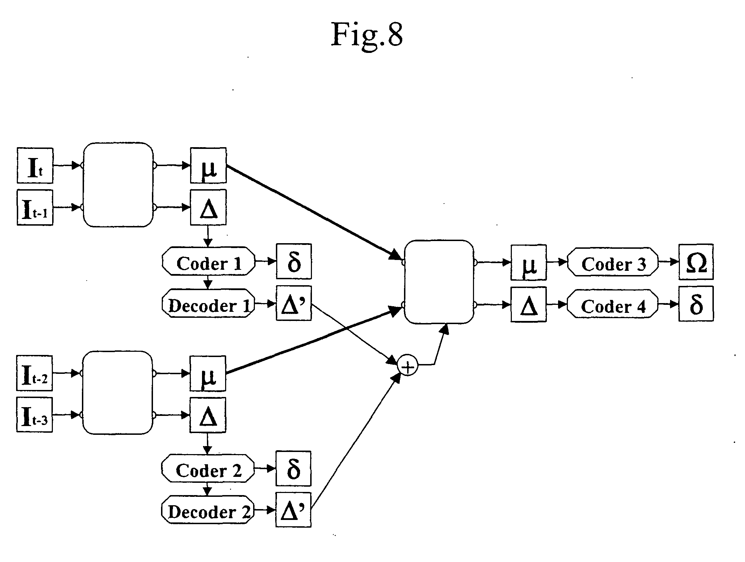

Note that this generalization requires that the encoder have access to the same information that will be available at the decoder. Because of this, the scheme of figure 4 must be generalized as shown in figure 8. For clarity of the scheme only one level of decomposition is reported as example. The input Iₜ-Iₜ₋₃ is now represented by the raw input images and not by the 2-D transform as it was in figure 4.

In this generalization the controlled transform block remains the one described in figure 5. As before, the controlled transform block of the first decomposition generates two pictures: the mean difference Δ and the mean µ. Δ is encoded using any possible coder (in figure 8 the result of the Coder 1 is called δ) . Then, δ is decoded using the corresponding Decoder 1. The result is an approximation of the input image difference, Δ'. We will see that this frame will be available at the decoder as well.

In the example of figure 8, the first level of decomposition, gives us two pictures Δ'. Their sum at a pixel level is the control signal for the following level of decomposition. The controlled transform block will decide whether to encode the decoded picture mean difference and mean or transmit the real values without temporal encoding according to the fact that the picture difference coded, quantized, dequantized, and decoded is equal or different from zero. This choice can be done at a pixel level and does not require to send any additional information from the encoder to the decoder since both takes their decisions from the same data. The pictures µ and Δ obtained are coded independently with any coder to generate two streams Ω and δ. Finally the streams sent to the decoder are Ω which is the coded result of the final mean µ, and the three δ streams corresponding to the coded versions of the 3 mean differences. The decoder is thus able to reconstruct the control signals Δ' from the corresponding δ's.

Note that in MPEG-4 standard a similar result is obtained by sending the information whether a block is encoded as intra or inter. In this case the choice is done at a block size resolution and with the additional cost of sending the instructions to the decoder

## Claims

1. Method of computing wavelets temporal coefficients of a GOP (Group Of Pictures) the length of which is 2ⁿ by applying recursively a temporal transform generating n decomposition levels each decomposition level comprising a function M (aᵢ,bᵢ) and a function D(aᵢ,bᵢ)for each couple of input signals aᵢ, bᵢ, **characterized in that** during the last n-1 decomposition levels each decomposition level transform block is controlled by a control signal corresponding to the sum of two functions D(aᵢ,bᵢ) outputted from the previous decomposition level while the corresponding functions M(aᵢ,bᵢ) of said previous decomposition level are the input signals for said transform block, and **in that** when the said control signal is equal to zero the output values of said transform block are the functions M(M(aᵢ,bᵢ), M(aᵢ₊₁,bᵢ₊₁)) and D(M(aᵢ,bᵢ), M(aᵢ₊₁,bᵢ₊₁)) of the input signals M(aᵢ,bᵢ) and when the control signal is different from zero the output signals are the said input signals.

2. Method according to claim 1, **characterized in that** the function M(aᵢ,bᵢ) is the mean value of signals aᵢ,bᵢ and the function D(aᵢ,bᵢ) is the quantization of the mean difference of the signals aᵢ,bᵢ .

3. Method according to claim 2, **characterized in that 2**^{**n**} **frames of the input sequence** are first independently transformed with any 2-D linear transform (wavelet, DCT,...) into a GOP of 2ⁿ pictures each picture containing the transform coefficients of each input frame, **in that** the obtained spatial transform coefficients are passed to a temporal transform generating a first level of temporal decompositions each decomposition comprising temporal mean and temporal difference, and **in that** for the further n-1 decomposition levels the control signal is the sum of the quantized version of two temporal mean differences outputted from the previous decomposition level.

4. Method according to claim 2, **characterized in that** the input values for the first decomposition level are the raw images, **in that** the control signal is the sum of the coded, quantized, dequantized and decoded image mean differences of the two signals outputted from the previous level.

5. Method according to claim 3, **characterized in that** the 2-D linear transform is the 2-D 5.3 wavelet transform where the low pass filter is a 5 tap filter and the high pass filter is a 3 tap filter.

6. Method according to one of the claims 1 to 4, **characterized in that** the said temporal transform is the Haar temporal transform.

## Patentansprüche

1. Verfahren zum Berechnen von zeitlichen Koeffizienten von Wavelets einer GOP (Gruppe von Bildern), deren Länge 2ⁿ beträgt, durch rekursives Anwenden einer zeitlichen Transformation, wodurch n Zerlegungsebenen erzeugt werden, wobei jede Zerlegungsebene eine Funktion M(aᵢ, bᵢ) und eine Funktion D(aᵢ, bᵢ) für jedes Paar von Eingangssignalen aᵢ, bᵢ umfaßt, **dadurch gekennzeichnet, daß** während der letzten n-1 Zerlegungsebenen jeder Zerlegungsebenen-Transformationsblock durch ein Steuersignal entsprechend der Summe von zwei aus der vorherigen Zerlegungsebene ausgegebenen Funktionen D(aᵢ, bᵢ) gesteuert wird, während die entsprechenden Funktionen M(aᵢ, bᵢ) der vorherigen Zerlegungsebene die Eingangssignale für den Transformationsblock sind, und daß, wenn das Steuersignal gleich null ist, die Ausgangswerte des Transformationsblocks die Funktionen M(M(aᵢ, bᵢ), M(aᵢ₊₁, bᵢ₊₁)) und D(M(aᵢ, bᵢ), M(aᵢ₊₁, bᵢ₊₁)) der Eingangssignale M(aᵢ, bᵢ) sind und, wenn das Steuersignal von null verschieden ist, die Ausgangssignale die Eingangssignale sind.

2. Verfahren nach Anspruch 1, **dadurch gekennzeichnet, daß** die Funktion M(aᵢ, bᵢ) der Mittelwert der Signale aᵢ, bᵢ und die Funktion D(aᵢ, bᵢ) die Quantisierung der mittleren Differenz der Signale aᵢ, bᵢ ist.

3. Verfahren nach Anspruch 2, **dadurch gekennzeichnet, daß** 2ⁿ Rahmen der Eingangssequenz zuerst unabhängig mit einer beliebigen 2-D-Lineartransformation (Wavelet, DCT, ...) in eine GOP von 2ⁿ Bildern transformiert werden, wobei jedes Bild die Transformationskoeffizienten jedes Eingangsrahmens enthält, daß die erhaltenen räumlichen Transformationskoeffizienten an eine zeitliche Transformation weitergeleitet werden, wodurch eine erste Ebene von zeitlichen Zerlegungen erzeugt wird, wobei jede Zerlegung zeitlichen Mittelwert und zeitliche Differenz umfaßt, und daß für die weiteren n-1 Zerlegungsebenen das Steuersignal die Summe der quantisierten Version zweier aus der vorherigen Zerlegungsebene ausgegebener zeitlicher mittlerer Differenzen ist.

4. Verfahren nach Anspruch 2, **dadurch gekennzeichnet, daß** es sich bei den Eingangswerten für die erste Zerlegungsebene um die unverarbeiteten Bilder handelt, daß das Steuersignal die Summe der codierten, quantisierten, dequantisierten und decodierten mittleren Differenzen der beiden aus der vorherigen Ebene ausgegebenen Signale ist.

5. Verfahren nach Anspruch 3, **dadurch gekennzeichnet, daß** die 2-D-Lineartransformation die 2-D-5.3-Wavelettransformation ist, wobei das Tiefpaßfilter ein Filter mit 5 Abgriffen und das Hochpaßfilter ein Filter mit 3 Abgriffen ist.

6. Verfahren nach einem der Ansprüche 1 bis 4, **dadurch gekennzeichnet, daß** die zeitliche Transformation die zeitliche Transformation von Haar ist.

## Revendications

1. Procédé de calcul de coefficients temporels d'ondelettes d'un GOP (Groupe d'Images complètes) dont la longueur est 2ⁿ en appliquant récursivement une transformée temporelle générant n niveaux de décomposition, chaque niveau de décomposition comprenant une fonction M(aᵢ, bᵢ) et une fonction D(aᵢ, bᵢ) pour chaque couple de signaux d'entrée aᵢ, bᵢ, **caractérisé en ce que** durant les n-1 derniers niveaux de décomposition, chaque bloc de transformée de niveau de décomposition est commandé par un signal de commande correspondant à la somme de deux fonctions D(aᵢ, bᵢ) sortie par le niveau de décomposition précédent tandis que les fonctions correspondantes M(aᵢ, bᵢ) dudit niveau de décomposition précédent sont les signaux d'entrée dudit bloc de transformée, et **en ce que** lorsque ledit signal de commande est égal à zéro, les valeurs de sortie dudit bloc de transformée sont les fonctions M(M(aᵢ, bᵢ), M(aᵢ₊₁, bᵢ₊₁)) et D(M(aᵢ, bᵢ), M(aᵢ₊₁, bᵢ₊₁)) des signaux d'entrée M(aᵢ, bᵢ) et quand le signal de commande est différent de zéro les signaux de sortie sont lesdits signaux d'entrée.

2. Procédé selon la revendication 1, **caractérisé en ce que** la fonction M(aᵢ, bᵢ) est la valeur moyenne des signaux aᵢ, bᵢ et la fonction D(aᵢ, bᵢ) est la quantification de la différence moyenne des signaux aᵢ, bᵢ.

3. Procédé selon la revendication 2, **caractérisé en ce que** 2ⁿ images de la séquence d'entrée sont tout d'abord transformées indépendamment avec n'importe quelle transformée linéaire bidimensionnelle (ondelettes, DCT, ...) en un GOP de 2ⁿ images complètes, chaque image complète contenant les coefficients de transformée de chaque image d'entrée, **en ce que** les coefficients de transformée spatiale obtenus sont passés à une transformée temporelle générant un premier niveau de décompositions temporelles, chaque décomposition comprenant une moyenne temporelle et une différence moyenne, et **en ce que** pour les n-1 autres niveaux de décomposition, le signal de commande est la somme de la version quantifiée des deux différences moyennes temporelles sorties par le niveau de décomposition précédent.

4. Procédé selon la revendication 2, **caractérisé en ce que** les valeurs d'entrée du premier niveau de décomposition sont des images brutes, **en ce que** le niveau de commande est la somme des différences moyennes d'images codées, quantifiées, déquantifiées, décodées des deux signaux sortis par le niveau précédent.

5. Procédé selon la revendication 3, **caractérisé en ce que** la transformée linéaire bidimensionnelle est la transformée en ondelettes bidimensionnelle 5.3 où le filtre passe-bas est un filtre à 5 prises et le filtre passe-haut est un filtre à 3 prises.

6. Procédé selon l'une quelconque des revendications 1 à 4, **caractérisé en ce que** ladite transformée temporelle est la transformée temporelle de Haar.
